# FASCICULE DE BREVET EUROPEEN

(11) **EP 4 159 616 B1**
(45) Date de publication et mention de la délivrance du brevet: **21.01.2026**
(21) Numéro de dépôt: 22190107.7
(22) Date de dépôt: 12.08.2022
(51) Int. Cl.: B64C 25/32, B64F 1/12, B64C 25/52

(54) **ENTRAVE POUR SÉCURISER UN AÉRONEF SUR UNE GRILLE D'ATTERRISSAGE ET AÉRONEF**
HINDERNIS ZUM SICHERN EINES LUFTFAHRZEUGS AUF EINEM LANDEGITTER UND LUFTFAHRZEUG
SHACKLE FOR SECURING AN AIRCRAFT ON A LANDING GRID AND AIRCRAFT

(30) Priorité: 30.09.2021 FR 2110327
(43) Date de publication de la demande: 05.04.2023
(73) Titulaire: Airbus Helicopters, 13725 Marignane Cedex (FR)
(72) Inventeur: GAILLARD, Christophe, 13640 LA ROQUE D ANTHERON (FR); DURANTET, Joël, 13480 CABRIES (FR); RASPIC, Nicolas, 13820 ENSUES LA REDONNE (FR)
(74) Mandataire: GPI Brevets

(56) Documents cités:
- WO-A1-91/04910
- FR-A- 1 253 269
- FR-A- 1 291 049

## Description

La présente invention concerne une entrave pour sécuriser un aéronef sur une grille d'atterrissage et un aéronef muni d'une telle entrave.

Un aéronef peut être posé sur une surface mobile ou exposée au vent, par exemple sur un navire. L'aéronef peut alors être muni d'un système permettant de le maintenir en position sensiblement immobile indépendamment du vent et/ou le cas échéant de la mobilité du navire et en particulier de son inclinaison en tangage et en roulis.

Un harpon d'ancrage est généralement agencé sous le fuselage de l'aéronef, entre les roues de trains d'atterrissage ou bien entre les patins d'un train d'atterrissage à patins. Le harpon comporte une tête de harpon mobile. La tête de harpon est munie d'une pince, d'un doigt ou autres se verrouillant automatiquement lors de l'appontage sur une grille d'atterrissage d'une plateforme. Une telle grille est parfois dénommée « grille d'appontage » dans le cadre d'un navire.

De plus, le harpon d'ancrage permet, après ancrage, par l'application d'un effort de traction entre le point d'ancrage et l'aéronef, de plaquer l'aéronef sur la plateforme afin d'augmenter sa stabilité et d'assurer son maintien sur la plateforme. Le harpon d'ancrage permet ainsi, dans un certain domaine d'inclinaison du navire et dans un certain domaine de vent, de remplacer temporairement un système d'amarrage.

Un harpon d'ancrage comporte un moyen de déploiement de la tête de harpon permettant d'une part le déplacement de la tête de harpon lors de l'appontage et, d'autre part, l'application d'un effort de traction sur la tête de harpon afin de plaquer l'aéronef sur la plateforme.

Le moyen de déploiement de la tête de harpon comporte généralement un vérin hydraulique, notamment sur un aéronef moyen ou lourd nécessitant des harpons puissants, ou un vérin électrique voire pneumatique sur des aéronefs plus légers.

Un harpon d'ancrage est intéressant et efficace, mais peut s'avérer relativement lourd puisque le harpon est susceptible de subir des efforts importants. En outre, son agencement sous le fuselage peut parfois être délicat en présence de certains équipements additionnels, tels que des caméras, des phares, des systèmes RADAR...

Par exemple, les documents FR 2 701 689 A1, FR 2 943 988 A1 et FR 2 982 241 A1 décrivent des harpons d'ancrage.

Le document FR 2 701 689 A1 présente un harpon ayant une tête de harpon comprenant une broche. La broche est munie de doigts orientés et mobiles radialement, de moyens pour entraîner et retenir en position sortie les doigts et de moyens pour déverrouiller les doigts.

Le document FR 2 943 988 A1 décrit un harpon d'ancrage à gaz muni d'une tige. Une extrémité libre de la tige comporte une tête de harpon équipée de doigts de retenue déplaçables entre une position escamotée et une position active par des moyens de commande.

Le document FR 2 982 241 A1 décrit un harpon ayant un actionneur bistable.

Le document FR 2 708 249 A1 décrit un adaptateur pour un système d'assistance à l'atterrissage et au décollage d'hélicoptères. L'adaptateur est muni d'une tête d'ancrage automatique dans une grille d'atterrissage.

Le document WO 91/04910 A1 décrit un dispositif de retenue, pour retenir, par exemple, un aéronef sur le pont d'un navire. Le dispositif de retenue comprend un bras articulé à un aéronef et à deux vérins. Le bras comporte un actionneur coopérant avec une tête. La tête comprend deux crochets ayant pour fonction de serrer un séparateur d'une grille d'appontage, le séparateur étant disposé entre deux alvéoles.

Le document FR 1 291 049 A décrit un dispositif d'amarrage. Le dispositif d'amarrage comporte un vérin muni d'un piston solidaire d'une tige de commande. Le dispositif d'amarrage comporte une tête portée par la tige de commande. La tête comporte une pointe de guidage et deux crochets.

Le document FR 1 253 269 A décrit un dispositif de retenue à vis rétractable pour un aéronef. La vis est déployée avant un atterrissage et mise en rotation pour être vissée à une plate-forme tapissée d'écrous orientables jointifs.

La présente divulgation a alors pour objet de proposer non pas un harpon qui s'ancre dans une grille d'atterrissage mais une entrave susceptible d'être moins complexe et lourde qu'un harpon pour tendre à limiter le glissement d'un aéronef à patins.

L'invention telle que revendiquée propose un assemblage selon la revendication 1. D'autres caractéristiques optionnelles sont revendiquées dans les revendications dépendantes 2-14.

La présente divulgation vise un assemblage avec une entrave pour un aéronef. Cette entrave comporte un vérin comprenant un boîtier et une tête mobile en translation par rapport au boîtier selon un axe en élévation, ladite tête présentant trois degrés de liberté en rotation respectivement selon un axe longitudinal ainsi qu'un axe transversal et l'axe en élévation, par exemple par rapport entre autres à une cellule de l'aéronef, ladite entrave comprenant un organe de reprise d'efforts entourant le vérin et muni d'une fixation apte à être solidarisée à l'aéronef.

Le vérin peut être un vérin électrique, pneumatique ou encore hydraulique. Le vérin peut être relié de manière usuelle à une interface de commande pour être étendu, si besoin au sol, ou rétracté, en vol notamment.

Dès lors, le vérin peut déplacer en translation la tête de l'entrave vers une grille d'atterrissage usuelle suite à l'atterrissage pour engager la tête dans la grille d'atterrissage. Une telle grille d'atterrissage comporte usuellement des alvéoles et des séparateurs séparant les alvéoles adjacentes. Les trois degrés de liberté en rotation de la tête de l'entrave lui permettent alors d'atteindre une position d'immobilisation, la tête pénétrant au moins partiellement dans une alvéole ou dans deux alvéoles en se positionnant de part et d'autre d'un séparateur de la grille. Lorsque la tête est en position au sein de la grille d'atterrissage, l'organe de reprise d'efforts limite le déplacement du vérin par rapport à l'aéronef et transmet en butée les efforts subis à l'aéronef. Il en résulte que les mouvements de l'aéronef par rapport à la grille d'atterrissage sont limités. La tête peut avoir une forme immuable/figée ne comprenant pas de pièces mobiles les unes par rapport aux autres, contrairement à une tête munie d'une pince ou d'au moins un doigt de blocage mobile en translation par exemple.

Ainsi, un aéronef peut comprendre une ou plusieurs entraves qui permettent chacune de limiter le glissement de l'aéronef, les entraves n'exerçant aucun effort de traction contrairement à un harpon. Chaque entrave peut être de fait compacte et relativement légère, les efforts subis étant directement repris par l'aéronef.

En effet, contrairement à des préjugés existants, il n'est pas forcément obligatoire d'utiliser un harpon d'ancrage assurant une traction. En fonction de la nature de l'aéronef, des conditions climatiques, des caractéristiques du navire ou pont flottant et de l'état de mer, la présente divulgation propose d'utiliser une entrave. Un aéronef peut être relativement stable sur le pont d'un bateau, au moins dans certains mouvements de pont, notamment un aéronef relativement léger et/ou à patins. Par conséquent, une telle entrave peut s'avérer suffisante dans des conditions de mouvements de pont limités mer raisonnables. L'entrave évite le glissement de l'aéronef sur le pont du bateau, le risque de basculement étant nul lorsque les mouvement de pont sont faibles.

L'entrave peut de plus comporter notamment une ou plusieurs des caractéristiques qui suivent, prises seules ou en combinaison.

L'entrave peut comporter un support portant ledit vérin, le vérin étant mobile en rotation par rapport au support selon l'axe longitudinal et l'axe transversal, la tête étant mobile en rotation par rapport au boîtier selon l'axe en élévation.

Par exemple, le support comporte un portant relié par une articulation au vérin. Cette configuration simple confère facilement à la tête la mobilité requise. Le support peut être léger puisque les efforts radiaux subis en cas de glissement transitent par l'organe de reprise d'efforts.

Selon une possibilité compatible avec la précédente, la tête peut comprendre une extrémité libre comprenant deux butées aptes à / configurées pour pénétrer conjointement dans une même alvéole d'une grille d'atterrissage, lesdites deux butées étant immobiles l'une par rapport à l'autre et séparées l'une de l'autre par un espace apte à accueillir un séparateur de ladite grille d'atterrissage séparant deux dites alvéoles.

La tête comprend ainsi deux éléments allongés formant deux butées formant une fourche. Dès lors, les deux butées sont configurées pour enserrer conjointement un séparateur en pénétrant dans deux alvéoles, et pour pouvoir être insérées dans une même alvéole.

Selon une possibilité compatible avec les précédentes, les deux butées peuvent comprendre chacune un tronçon d'extrémité effilé en s'éloignant du boitier.

Lors de l'extension du vérin, cette caractéristique favorise la rotation de la tête par rapport à la grille d'atterrissage pour atteindre sa position d'immobilisation soit dans une alvéole soit dans deux alvéoles autour d'un séparateur, en fonction du point de contact initial entre la tête et le grille d'atterrissage.

Selon une possibilité compatible avec les précédentes, au moins un tronçon d'extrémité effilé peut être arrondi.

Lors de l'extension du vérin, cette caractéristique favorise la rotation de la tête, par rapport à la grille d'atterrissage, pour son engagement dans la grille d'atterrissage, en évitant un blocage avant qu'une position d'immobilisation soit atteinte.

Selon une possibilité compatible avec les précédentes, les deux butées peuvent être différentes.

Lors de l'extension du vérin, cette caractéristique favorise la rotation de la tête, par rapport à la grille d'atterrissage, pour son engagement dans la grille d'atterrissage, en évitant un blocage avant qu'une position d'immobilisation soit atteinte. La tête a une forme asymétrique afin d'éviter un blocage du vérin alors que la tête n'est pas correctement positionnée. La forme asymétrique peut éventuellement favoriser un sens de rotation de la tête.

Selon une possibilité compatible avec les précédentes, une butée desdites deux butées peut s'étendre parallèlement à l'axe en élévation sur une première longueur et l'autre butée s'étend parallèlement à l'axe en élévation sur une deuxième longueur supérieure à la première longueur.

Lors de l'extension du vérin, cette caractéristique favorise la rotation de la tête, par rapport à la grille d'atterrissage, pour son engagement dans la grille d'atterrissage, en tendant à éviter le blocage dans une position non optimale. Cette caractéristique permet d'éviter que la tête entre en contact avec la grille d'atterrissage simultanément en deux points et n'atteigne pas une position d'immobilisation.

Selon une possibilité compatible avec les précédentes, lesdites deux butées peuvent comprendre chacune une face externe arrondie concave au regard de l'axe en élévation, à savoir vue de l'axe en élévation.

Les alvéoles d'une grille d'atterrissage ont usuellement une forme cylindrique. Dès lors, les faces externes peuvent avoir une forme complémentaire à la paroi délimitant une alvéole pour assurer un maintien optimal dans une alvéole.

Selon une possibilité compatible avec les précédentes, les deux butées peuvent comprendre chacune une face interne arrondie convexe au regard de l'axe en élévation, à savoir vue de l'axe en élévation.

Les faces internes peuvent avoir une forme complémentaire à des parois d'un séparateur pour assurer un maintien optimal lorsque la tête est emmanchée autour de ce séparateur. Le cas échéant, cette forme tend à favoriser le glissement de la tête contre la grille d'atterrissage pour atteindre une position d'immobilisation. Le jeu présent entre le séparateur et la tête peut être minimisé.

Selon une possibilité compatible avec les précédentes, une butée des deux butées peut comporter une forme ovale dans un plan orthogonal à l'axe en élévation et l'autre butée a une forme ovale tronquée dans ledit plan.

Lors de l'extension du vérin, cette caractéristique favorise la rotation de la tête, par rapport à la grille d'atterrissage, pour son engagement dans la grille d'atterrissage.

La présente divulgation concerne l'assemblage comprenant une grille d'atterrissage pourvue de plusieurs alvéoles, chaque alvéole étant séparée d'une alvéole adjacente par un séparateur de la grille d'atterrissage. Cet assemblage comporte alors une dite entrave, lesdites butées ayant conjointement une forme pouvant être inscrite dans chaque alvéole, ledit espace ayant une forme pouvant contenir chaque séparateur.

La présente divulgation concerne aussi l'assemblage avec un aéronef comportant au moins une dite entrave.

L'aéronef comportant un train d'atterrissage, la fixation de l'organe de reprise d'efforts étant solidarisée au train d'atterrissage ou à une perche solidaire d'une cellule de l'aéronef.

L'entrave pouvant comprendre un support portant le vérin et l'aéronef pouvant comporter un train d'atterrissage, le support peut être fixé au train d'atterrissage ou à une perche solidaire d'une cellule de l'aéronef.

Eventuellement, l'entrave peut être attachée au train d'atterrissage en tant que tel ou bien à une perche fixée à une cellule de l'aéronef ou au train d'atterrissage par exemple.

L'entrave peut notamment ne pas être agencée sous la cellule, contrairement à un harpon. Un tel agencement, notamment sur le train d'atterrissage, peut faciliter la pose et/ou la dépose de l'entrave. Cet agencement peut éviter de gêner l'accès au dessous de l'aéronef et/ou la mise en place d'autres équipements, tels que des équipements de surveillance type boule optronique, phare, camera ou radar par exemple.

Selon une possibilité, le train d'atterrissage peut être un train d'atterrissage à patins, la fixation et le support pouvant être fixés à un patin du train d'atterrissage, le support pouvant avoir une articulation portant le vérin, l'articulation pouvant être située au dessus de l'organe de reprise d'efforts lorsque l'aéronef est posé.

Le vérin peut être monté sur une articulation de type rotule ou cardan du support afin d'avoir une liberté de mouvement angulaire au moins autour de l'axe longitudinal et de l'axe transversal. Cette articulation peut être déportée en hauteur par rapport au sol en étant au dessus de l'organe de reprise d'efforts. Les efforts radiaux introduits dans le vérin lors d'un glissement de l'aéronef sont alors repris par l'organe de reprise d'efforts au niveau du patin.

L'invention et ses avantages apparaîtront avec plus de détails dans le cadre de la description qui suit avec des exemples donnés à titre illustratif en référence aux figures annexées qui représentent :
la figure 1, un exemple d'aéronef selon l'invention ayant un train d'atterrissage à roue(s),
la figure 2, un exemple d'aéronef selon l'invention ayant un train d'atterrissage à patins,
la figure 3, une vue en trois dimensions d'une entrave selon l'invention étendue,
la figure 4, une vue en trois dimensions d'une entrave ayant une tête interfacée dans une grille d'atterrissage,
la figure 5, une coupe schématique d'un vérin selon l'invention,
la figure 6, une coupe schématique d'un vérin selon l'invention,
la figure 7, une coupe schématique d'une première butée d'un vérin selon l'invention,
la figure 8, une coupe schématique d'une deuxième butée d'un vérin selon l'invention,
la figure 9, une coupe schématique des butées d'un vérin selon l'invention agencées dans une alvéole,
la figure 10, une coupe schématique des butées d'un vérin selon l'invention agencées autour d'un séparateur,
la figure 11, un schéma illustrant le fonctionnement d'une entrave,
la figure 12, un schéma illustrant le positionnement d'une tête d'une entrave dans une alvéole, et
la figure 13, un schéma illustrant le positionnement d'une tête d'une entrave entre deux alvéoles.

Les éléments présents dans plusieurs figures distinctes sont affectés d'une seule et même référence.

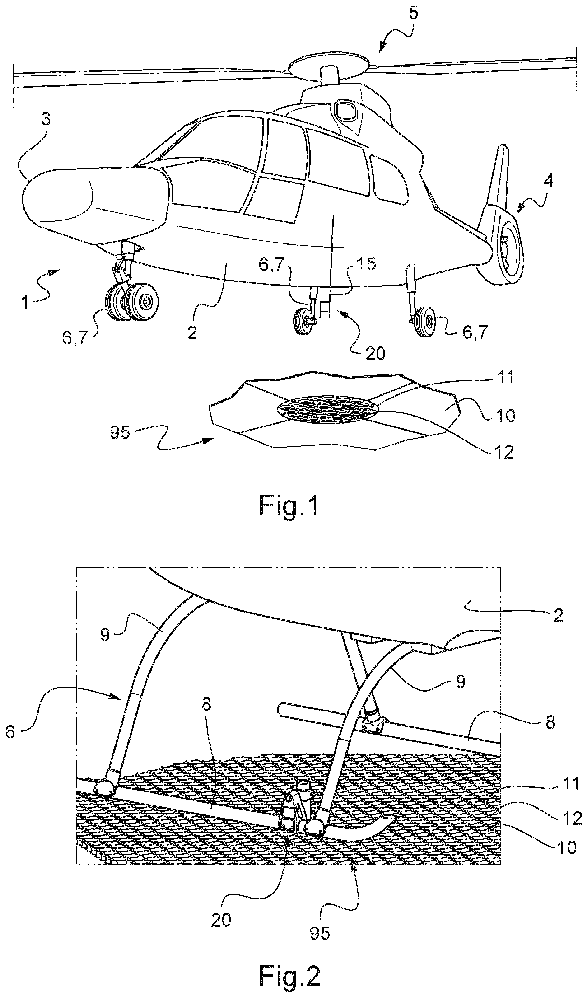

Les figures 1 et 2 illustrent des exemples d'aéronefs 1 selon la présente divulgation. Un tel aéronef 1 peut être un aéronef avec ou sans pilote embarqué.

Tel qu'illustré sur la figure 1, l'aéronef 1 peut comprendre au moins une voilure tournante 5 portée par une cellule 2, la cellule 2 pouvant par exemple s'étendre d'un nez 3 vers une queue 4.

Par ailleurs et quelle que soit la réalisation, l'aéronef 1 peut comprendre un ou plusieurs trains d'atterrissage 6. Selon la figure 1, l'aéronef 1 peut comprendre plusieurs trains d'atterrissage comprenant chacun au moins une roue 7. Selon la figure 2, l'aéronef 1 peut comprendre un train d'atterrissage à patins 8. Un tel train d'atterrissage à patins comprend par exemple au moins deux patins 8 et au moins deux traverses 9.

Indépendamment de la nature de l'aéronef 1 et du type de train d'atterrissage qu'il comporte, un aéronef 1 comprend au moins une entrave 20 configurée pour pouvoir être engagée dans une grille d'atterrissage 10 dans une position d'immobilisation. Une entrave 20 et une grille d'atterrissage 10 forment un assemblage 95. De manière usuelle, la grille d'atterrissage 10 comprend une structure délimitant des alvéoles 11, la structure ayant des séparateurs 12 entre les alvéoles 11 adjacentes. Les alvéoles 11 ont par exemple des formes cylindriques à base circulaire.

Une telle entrave 20 peut être portée par une perche 15. Cette perche 15 peut être solidaire de la cellule 2 ou autres selon l'exemple de la figure 1, ou directement d'un train d'atterrissage selon l'exemple de la figure 2 où une entrave 20 est fixée à un patin 8.

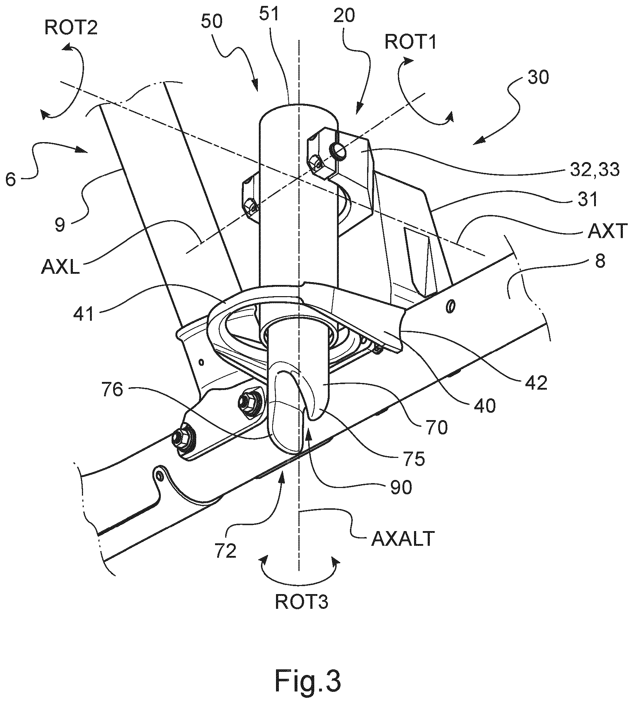

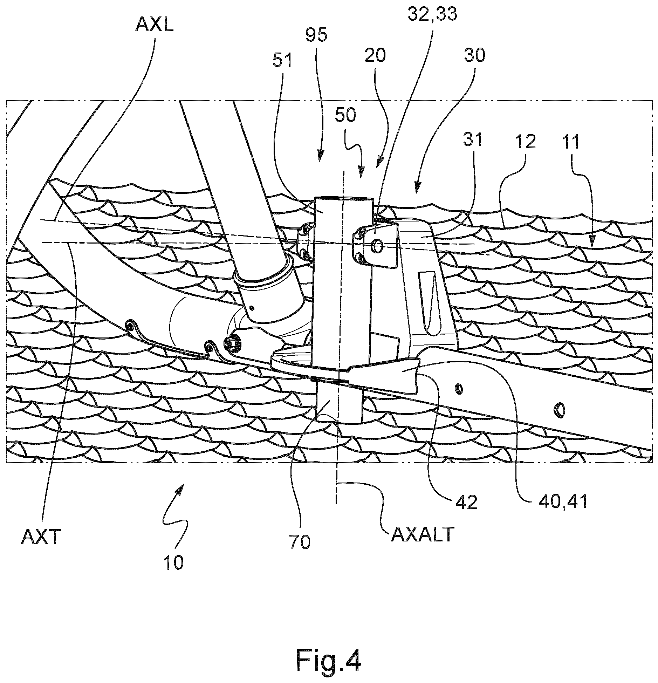

La figure 3 présente une entrave 20 étendue et la figure 4 illustre cette même entrave 20 engagée dans une grille d'atterrissage 10. L'entrave 20 est fixée, à titre illustratif, à un patin 8, mais les explications suivantes sont aussi valables pour une fixation à une perche 15, sauf mention contraire.

En référence à la figure 3, l'entrave 20 comporte un vérin 50. Le vérin 50 est muni d'un boîtier 51 et d'une tête 70 mobile en translation par rapport au boîtier 51 selon un axe en élévation AXALT par rapport à la cellule ou au patin.

La tête 70 présente trois degrés de liberté en rotation ROT1, ROT2, ROT3 respectivement autour d'un axe longitudinal AXL ainsi que d'un axe transversal AXT et de l'axe en élévation AXALT. L'axe en élévation peut en outre être mobile par rapport à l'axe longitudinal AXL et l'axe transversal AXT

Selon un exemple, la tête 70 est uniquement mobile en translation par rapport au boîtier 51, le boitier 51 étant mobile en rotation selon les trois axes précédents, via une rotule éventuellement. Dans ce cas, la rotule confère une liberté de mouvement au vérin autour de l'axe longitudinal AXL, de l'axe transversal AXT et de l'axe en élévation AXALT

Selon un autre exemple, la tête 70 est à cet effet mobile en rotation ROT3 par rapport au boîtier 51 autour de l'axe en élévation AXALT, cet axe en élévation pouvant en outre être mobile par rapport à l'axe longitudinal AXL et l'axe transversal AXT. Le vérin 50 peut être articulé à un support 30 par une articulation le rendant mobile en rotation par rapport au support 30 uniquement selon l'axe longitudinal AXL et l'axe transversal AXT. Le support 30 est alors fixé, par exemple, à un train d'atterrissage 6, et par exemple à un patin 8, ou à une perche 15.

Selon la réalisation illustrée, le support 30 peut comprendre un bâti 31 fixé au train d'atterrissage 6 ou à la perche 15. De plus, le support 30 comporte une articulation 32 articulant le boîtier 51 au bâti 31 selon l'axe longitudinal AXL et l'axe transversal AXT. Par exemple, l'articulation 32 comporte une chape 33 portée par un palier ou un équivalent du bâti 31 pour être mobile en rotation autour de l'axe transversal AXT, le vérin 50, et en particulier son boitier 51, étant articulés à la chape 33 autour de l'axe longitudinal AXL.

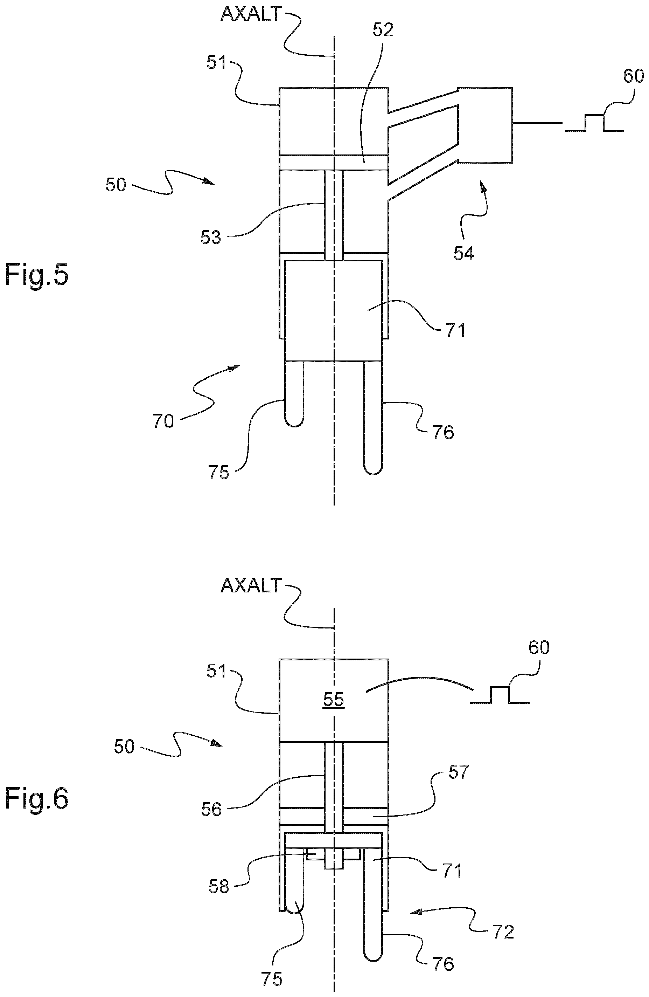

Le vérin 50 peut être de différents types pour déplacer la tête 70 par rapport à l'aéronef 1 et peut être piloté par une interface de commande 60. Une telle interface de commande 60 peut comprendre un bouton, un dalle tactile, une commande vocale, une antenne recevant un signal de commande... Les figures 5 et 6 donnent des exemples non limitatifs de vérins.

La figure 5 illustre un exemple de vérin 50 hydraulique ou pneumatique, apte à déplacer en translation la tête 70 le long de l'axe en élévation AXALT en lui laissant un degré de liberté en rotation autour de cet axe en élévation AXALT.

Selon cet exemple, un piston 52 peut séparer le volume interne du boîtier 51 en deux chambres en communication avec un circuit hydraulique ou pneumatique 54 piloté par l'interface de commande 60. Le piston 52 est solidaire d'une tige de piston 53 portant la tête 70. En outre, la tête 70 est mobile en rotation autour de l'axe en élévation AXALT par rapport au boîtier 51. Par exemple, le piston 52, la tige de piston 53 et la tête 70 peuvent être mobiles en rotation autour de l'axe en élévation AXALT par rapport au boîtier 51.

La figure 6 illustre un exemple de vérin électrique. Le boîtier 51 loge un moteur électrique 55, par exemple un moteur électrique linéaire muni d'une tige de sortie 56 mobile en translation selon l'axe en élévation AXALT. La tête 70 peut être reliée à cette tige de sortie 56 avec un degré de liberté en rotation autour de l'axe en élévation AXALT. Par exemple, la tête 70 comporte une plaque agencée entre un épaulement 57 de la tige de sortie 56 et un écrou 58 ou équivalent.

Quelle que soit la variante, chaque vérin 50 peut comprendre des capteurs usuels, des moyens d'immobilisation de la tête 70 et/ou peut communiquer avec un alerteur apte à signaler la position de la tête à un opérateur.

Indépendamment de la manière de rendre mobile la tête 70 par rapport à l'aéronef 1 et en référence à nouveau à la figure 3, l'entrave 20 comporte un organe de reprise d'efforts 40 pour limiter les mouvements de l'aéronef 1 par rapport au vérin 50 et transmettre les efforts subis par l'entrave 20 à cet aéronef 1. L'organe de reprise d'efforts 40 entoure localement le vérin 50, par exemple sous l'articulation 32. De plus, l'organe de reprise d'efforts 40 est muni d'une ou de plusieurs fixations 42 pour être fixé au support 30, ou au train d'atterrissage 6, par exemple au patin 8 le cas échéant, ou à la perche 15.

A cet effet, l'organe de reprise d'efforts 40 peut comprendre un anneau de retenue 41 muni de la ou des fixations 42. Une telle fixation 42 peut comprendre un orifice traversé par une vis ou un rivet par exemple. L'anneau de retenue 41 entoure un volume traversé par le boîtier 51. L'anneau de retenue comporte une paroi qui décrit une ligne fermée autour du volume, voire autour d'un axe de symétrie de la paroi. Le boîtier 51 est mobile dans ledit volume. Le vérin 50 a donc une liberté de mouvement par rapport à l'organe de reprise d'efforts 40 limitée.

Pour être correctement engagée dans la grille d'atterrissage 10, la tête 70 comprend une extrémité libre 72 comprenant deux butées 75, 76. Par exemple, la tête 70 comporte un socle 71 prolongé selon l'axe en élévation AXALT par les deux butées 75, 76. Les deux butées peuvent s'étendre parallèlement l'une par rapport à l'autre.

Les deux butées 75, 76 sont immobiles l'une par rapport à l'autre. Les deux butées 75, 76 peuvent être agencées de part et d'autre de l'axe en élévation AXALT. Par ailleurs, un espace 90 peut séparer les deux butées perpendiculairement à l'axe en élévation AXALT.

Les deux butées 75, 76 sont dimensionnées pour pouvoir pénétrer conjointement dans une même alvéole 11 dans une position d'immobilisation, par exemple en étant inscrites dans un cylindre de rayon inférieur au rayon de chaque alvéole 11. De plus, les deux butées 75, 76 sont dimensionnées pour pouvoir être emmanchées autour d'un séparateur 12 de manière à ce qu'une butée 75 soit alors dans une alvéole 11 et l'autre butée 76 soit dans une autre alvéole 11 adjacente dans une position d'immobilisation.

Pour faciliter le positionnement des butées 75,76 dans une position d'immobilisation, chaque butée 75, 76 peut comprendre un tronçon d'extrémité 77, 78 qui s'effile en s'éloignant du boîtier 51. Au moins un tronçon d'extrémité 77,78 peut en outre être arrondi.

De manière complémentaire ou alternative, les deux butées 75, 76 sont différentes.

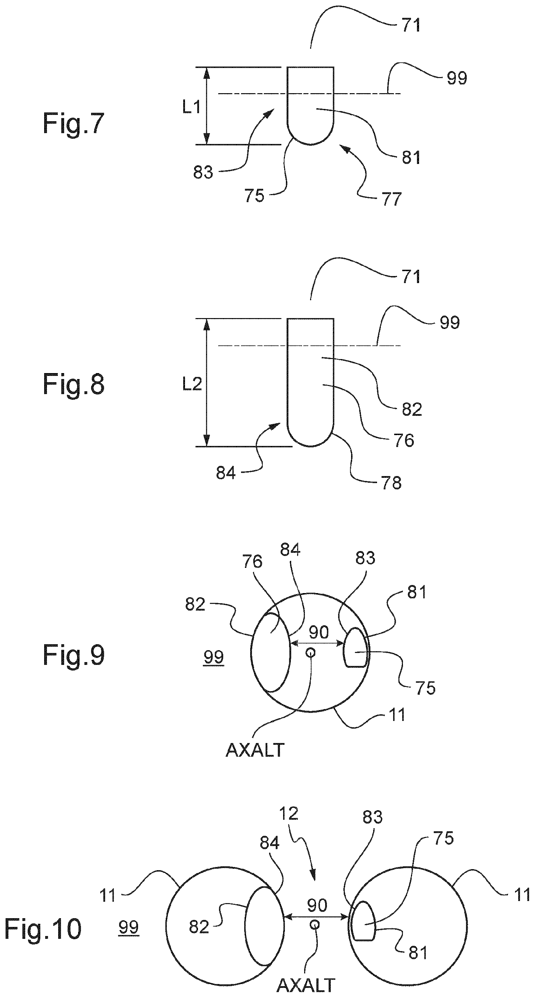

Selon la figure 7, une première butée 75 peut en effet s'étendre selon l'axe en élévation AXALT sur une première longueur L1, à partir du socle 71 le cas échéant. Selon la figure 8, une deuxième butée 76 peut s'étendre selon l'axe en élévation AXALT à partir du socle 71 le cas échéant, sur une deuxième longueur L2 supérieure à la première longueur L1. En outre, la deuxième butée 76 peut avoir un bout arrondi avec un rayon plus important que le rayon de la première butée 75.

Selon la figure 9, les deux butées 75, 76 peuvent chacune s'étendre radialement, au regard de l'axe en élévation AXALT d'une face interne 83, 84 arrondie à une face externe 81, 82 arrondie. Les deux faces internes 83, 84 sont en vis-à-vis.

Les deux faces externes 81, 82 peuvent chacune être concaves au regard de l'axe en élévation AXALT. A l'inverse, les deux faces internes 83, 84 peuvent être convexes au regard de l'axe en élévation AXALT.

Dans un plan 99 orthogonal à l'axe en élévation AXALT, une butée peut avoir une section de forme ovale tronquée alors que l'autre butée peut avoir une section de forme ovale. Selon l'exemple illustré, la première butée 75 a une section de forme ovale tronquée alors que la deuxième butée 76 a une section de forme ovale.

Selon la figure 9, les deux butées 75, 76 peuvent alors être inscrites dans une alvéole 11. Selon la figure 10, les deux butées 75,76 peuvent être disposées respectivement dans deux alvéoles 11 adjacentes.

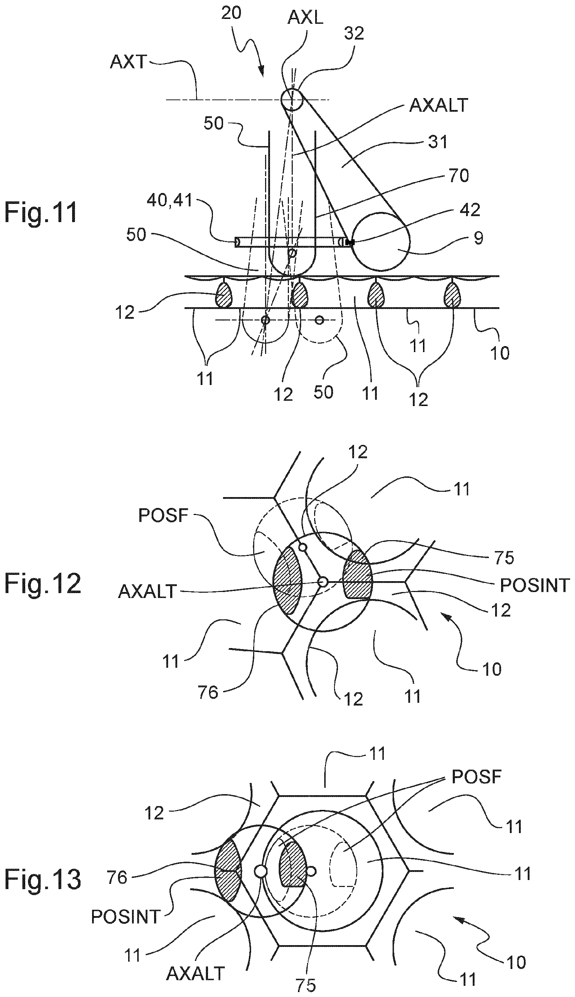

Les figures 11 à 13 illustrent le fonctionnement de l'entrave 20.

En référence à la figure 11, lorsque l'aéronef 1 est posé, le vérin 50 est étendu, sur l'ordre éventuel de l'interface de commande 60. La tête 70 représentée schématiquement se déplace vers la grille d'atterrissage 10. La tête 70 peut alors pénétrer directement dans une alvéole 12 si une telle alvéole 11 se trouve au droit de la tête 70.

Par contre, si la tête 70 touche la structure de la grille d'atterrissage 10, la tête 70 effectue, conjointement avec son mouvement translatif, au moins un mouvement rotatif autour d'un des axes longitudinal AXL, transversal AXT ou en élévation AXALT. Le schéma illustre diverses positions d'immobilisation possiblement atteintes à l'issue de ces mouvements.

Les figures 12 et 13 illustrent diverses situations.

Selon la figure 12, la première butée 75 peut toucher la structure de la grille d'atterrissage 10 alors que la deuxième butée 76 se trouve dans une alvéole 11 dans une position intermédiaire POSINT. L'extension du vérin 50 provoque alors la rotation de la tête 70 qui conduit la première butée 75 dans une autre alvéole 11 que la deuxième butée 76 dans la position d'immobilisation finale POSF.

Selon la figure 13, la deuxième butée 76 peut toucher la structure de la grille d'atterrissage 10, la première butée 75 plus courte étant alors au dessus de la grille d'atterrissage 10. L'extension du vérin 50 provoque alors la rotation de la tête 70 qui conduit la première butée 75 et la deuxième butée 76 dans une même alvéole 11 dans la position d'immobilisation finale POSF.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Assemblage (95) comprenant une grille d'atterrissage (10) pourvue de plusieurs alvéoles (11), chaque alvéole (11) étant séparée d'une alvéole (11) adjacente par un séparateur (12) de la grille d'atterrissage (10), l'assemblage (95) comportant une entrave (20) pour un aéronef (1), ladite entrave (20) comporte un vérin (50) comprenant un boîtier (51) et une tête (70) mobile en translation par rapport au boîtier (51) selon un axe en élévation (AXALT), ladite tête (70) présentant trois degrés de liberté en rotation respectivement selon un axe longitudinal (AXL) ainsi qu'un axe transversal (AXT) et l'axe en élévation (AXALT), ladite entrave (20) comprenant un organe de reprise d'efforts (40) entourant le vérin (50) et muni d'une fixation (42) apte à être solidarisée à l'aéronef (1),
**caractérisé en ce que** ladite tête (70) comprend une extrémité libre (72) comprenant deux butées (75, 76) configurées pour pénétrer conjointement dans une même alvéole (11) de la grille d'atterrissage (10), lesdites deux butées (75, 76) étant immobiles l'une par rapport à l'autre et séparées l'une de l'autre par un espace (90) configuré pour accueillir un séparateur (12) de ladite grille d'atterrissage (10) séparant deux dites alvéoles (11), lesdites butées (75, 76) ayant conjointement une forme pouvant être inscrite dans chaque alvéole (11), ledit espace (90) ayant une forme pouvant contenir chaque séparateur (12).

2. Assemblage selon la revendication 1,
**caractérisé en ce que** ladite entrave (20) comporte un support (30) portant ledit vérin (50), ledit vérin (50) étant mobile en rotation par rapport au support (30) selon l'axe longitudinal (AXL) et l'axe transversal (AXT), la tête (70) étant mobile en rotation par rapport au boîtier (51) selon l'axe en élévation (AXALT).

3. Assemblage selon l'une quelconque des revendications 1 à 2, **caractérisé en ce que** lesdits deux butées (75, 76) comprennent chacune un tronçon d'extrémité (77, 78) effilé en s'éloignant dudit boîtier (51).

4. Assemblage selon la revendication 3,
**caractérisé en ce qu'**au moins un tronçon d'extrémité (77,78) effilé est arrondi.

5. Assemblage selon l'une quelconque des revendications 1 à **4, caractérisé en ce que** les deux butées (75, 76) sont différentes.

6. Assemblage selon la revendication 5,
**caractérisé en ce qu'**une butée (75) desdites deux butées (75,76) s'étend parallèlement à l'axe en élévation sur une première longueur (L1) et l'autre butée (76) s'étend parallèlement à l'axe en élévation sur une deuxième longueur (L2) supérieure à la première longueur (L1).

7. Assemblage selon l'une quelconque des revendications 1 à 6, **caractérisé en ce que** lesdites deux butées (75, 76) comprennent chacune une face externe (81, 82) arrondie concave au regard de l'axe en élévation (AXALT).

8. Assemblage selon l'une quelconque des revendications 1 à 7, **caractérisé en ce que** lesdites deux butées (75, 76) comprennent chacune une face interne (83, 84) arrondie convexe au regard de l'axe en élévation (AXALT).

9. Assemblage selon l'une quelconque des revendications 1 à 8, **caractérisé en ce qu'**une butée (76) desdites deux butées (75,76) comporte une forme ovale dans un plan (99) orthogonal à l'axe en élévation (AXALT) et l'autre butée (75) a une forme ovale tronquée dans ledit plan (99).

10. Assemblage selon l'une quelconque des revendications 1 à 9, **caractérisé en ce que** ledit organe de reprise d'efforts (40) comporte un anneau de retenue (41) entourant un volume traversé par ledit boîtier (51), ledit boîtier (51) étant mobile dans ledit volume.

11. Assemblage selon l'une quelconque des revendications 1 à 10, **caractérisé en ce que** ledit assemblage comporte un aéronef (1) muni de ladite une entrave (20),

12. Assemblage selon la revendication **11,**
**caractérisé en ce que** ledit aéronef (1) comporte un train d'atterrissage (6), ladite fixation (42) dudit organe de reprise d'efforts (40) étant solidarisée au train d'atterrissage (6) ou à une perche (15) solidaire d'une cellule (2) de l'aéronef (1).

13. Assemblage selon l'une quelconque des revendications **11 à** 12,
**caractérisé en ce que**, ladite entrave (20) comprenant un support (30) portant le vérin (50) et ledit aéronef (1) comportant un train d'atterrissage (6), ledit support (30) est fixé au train d'atterrissage (6) ou à une perche (15) solidaire d'une cellule (2) de l'aéronef (1).

14. Assemblage selon les revendications 12 et 13,
**caractérisé en ce que** ledit train d'atterrissage (6) est un train d'atterrissage à patins (8), ladite fixation (42) et le support (30) étant fixés à un patin (8) du train d'atterrissage (6), ledit support (30) ayant une articulation (32) portant le vérin (50), l'articulation (32) étant située au dessus dudit organe de reprise d'efforts (40) lorsque l'aéronef (1) est posé.

## Patentansprüche

1. Baugruppe (95) mit einem mehrere Zellen (11) umfassenden Landegitter (10), wobei jede Zelle (11) durch einen Separator (12) des Landegitters (10) von einer benachbarten Zelle (11) getrennt ist, wobei die Baugruppe (95) eine Sperre (20) für ein Luftfahrzeug (1) umfasst, wobei die Sperre (20) einen Zylinder (50) umfasst, der ein Gehäuse (51) und einen in Bezug auf das Gehäuse (51) entlang einer Höhenachse (AXALT) verschiebbaren Kopf (70) umfasst, wobei der Kopf (70) drei Rotationsfreiheitsgrade aufweist, jeweils entlang einer Längsachse (AXL) sowie einer Querachse (AXT) und der Höhenachse (AXALT), wobei die Sperre (20) ein Kraftübertragungselement (40) umfasst, das den Zylinder (50) umgibt und mit einer Befestigung (42) versehen ist, die mit dem Luftfahrzeug (1) verbindbar ist,
**dadurch gekennzeichnet, dass** der Kopf (70) ein freies Ende (72) mit zwei Anschlägen (75, 76) aufweist, die konfiguriert sind, um gemeinsam in eine gleiche Zelle (11) des Landegitters (10) einzudringen, wobei die beiden Anschläge (75, 76) relativ zueinander unbeweglich sind und durch einen Zwischenraum (90) voneinander getrennt sind, der konfiguriert ist, um einen Separator (12) des Landegitters (10) aufzunehmen, der zwei der Zellen (11) trennt, wobei die Anschläge (75, 76) zusammen eine Form haben, die in jede Zelle (11) passt, und der Zwischenraum (90) eine Form hat, die jeden Separator (12) aufnehmen kann.

2. Baugruppe nach Anspruch 1,
**dadurch gekennzeichnet, dass** die Sperre (20) eine Halterung (30) aufweist, die den Zylinder (50) trägt, wobei der Zylinder (50) relativ zur Halterung (30) um die Längsachse (AXL) und die Querachse (AXT) drehbar ist und der Kopf (70) relativ zum Gehäuse (51) um die Höhenachse (AXALT) drehbar ist.

3. Baugruppe nach einem der Ansprüche 1 bis 2,
**dadurch gekennzeichnet, dass** die beiden Anschläge (75, 76) jeweils einen Endabschnitt (77, 78) aufweisen, der sich vom Gehäuse (51) weg verjüngt.

4. Baugruppe nach Anspruch 3,
**dadurch gekennzeichnet, dass** mindestens ein sich verjüngender Endabschnitt (77, 78) abgerundet ist.

5. Baugruppe nach einem der Ansprüche 1 bis 4,
**dadurch gekennzeichnet, dass** die beiden Anschläge (75, 76) unterschiedlich sind.

6. Baugruppe nach Anspruch 5,
**dadurch gekennzeichnet, dass** sich ein Anschlag (75) der beiden Anschläge (75, 76) parallel zur Höhenachse über eine erste Länge (L1) erstreckt und der andere Anschlag (76) sich parallel zur Höhenachse über eine zweite Länge (L2) erstreckt, die größer ist als die erste Länge (L1).

7. Baugruppe nach einem der Ansprüche 1 bis 6,
**dadurch gekennzeichnet, dass** die beiden Anschläge (75, 76) jeweils eine Außenfläche (81, 82) aufweisen, die zur Höhenachse (AXALT) hin konkav gerundet ist.

8. Baugruppe nach einem der Ansprüche 1 bis 7,
**dadurch gekennzeichnet, dass** die beiden Anschläge (75, 76) jeweils eine Innenfläche (83, 84) aufweisen, die zur Höhenachse (AXALT) hin konvex gerundet ist.

9. Baugruppe nach einem der Ansprüche 1 bis 8,
**dadurch gekennzeichnet, dass** ein Anschlag (76) der beiden Anschläge (75, 76) in einer zur Höhenachse (AXALT) orthogonalen Ebene (99) eine ovale Form aufweist und der andere Anschlag (75) in dieser Ebene (99) eine abgeschnitten ovale Form aufweist.

10. Baugruppe nach einem der Ansprüche 1 bis 9,
**dadurch gekennzeichnet, dass** das Kraftübertragungselement (40) einen Haltering (41) aufweist, der einen Raum umgibt, durch den sich das Gehäuse (51) erstreckt, wobei das Gehäuse (51) in diesem Raum beweglich ist.

11. Baugruppe nach einem der Ansprüche 1 bis 10,
**dadurch gekennzeichnet, dass** die Baugruppe ein Luftfahrzeug (1) umfasst, das mit der einen Sperre (20) ausgestattet ist.

12. Baugruppe nach Anspruch 11,
**dadurch gekennzeichnet, dass** das Luftfahrzeug (1) ein Landegestell (6) umfasst, wobei die Befestigung (42) des Kraftübertragungselements (40) mit dem Landegestell (6) oder einer Stange (15) verbunden ist, die mit einer Kabine (2) des Luftfahrzeugs (1) verbunden ist.

13. Baugruppe nach einem der Ansprüche 11 bis 12,
**dadurch gekennzeichnet, dass** die Sperre (20) eine den Zylinder (50) tragende Halterung (30) umfasst und das Luftfahrzeug (1) ein Landegestell (6) aufweist, und dass die Halterung (30) am Landegestell (6) oder an einer mit einer Kabine (2) des Luftfahrzeugs (1) verbundenen Stange (15) befestigt ist.

14. Baugruppe gemäß den Ansprüchen 12 und 13,
**dadurch gekennzeichnet, dass** das Landegestell (6) ein Landegestell mit Kufen (8) ist, wobei die Befestigung (42) und die Halterung (30) an einer Kufe (8) des Landegestells (6) befestigt sind, wobei die Halterung (30) ein Gelenk (32) aufweist, das den Zylinder (50) trägt, und das Gelenk (32) sich über dem Kraftübertragungselement (40) befindet, wenn das Luftfahrzeug (1) gelandet ist.

## Claims

1. Assembly (95) comprising a landing mat (10) provided with several cells (11), each cell (11) being separated from an adjacent cell (11) by a separator (12) of the landing mat (10), the assembly (95) comprising a barrier (20) for an aircraft (1), said barrier (20) comprises a cylinder (50) comprising a housing (51) and a head (70) translatably moveable with respect to the housing (51) along an elevated axis (AXALT), said head (70) having three degrees of freedom in rotation, respectively along a longitudinal axis (AXL) as well as a transverse axis (AXT) and the elevated axis (AXALT), said barrier (20) comprising a force-absorbing member (40) surrounding the cylinder (50) and provided with a fixing (42), capable of being secured to the aircraft (1),
**characterised in that** said head (70) comprises a free end (72) comprising two abutments (75, 76) configured to penetrate together in one same cell (11) of the landing mat (10), said two abutments (75, 76) being immoveable against one another, and separated from one another by a space (90) configured to accommodate a separator (12) of said landing mat (10) separating two said cells (11), said abutments (75, 76) having together a shape being able to fall into each cell (11), said space (90) having a shape being able to contain each separator (12).

2. Assembly according to claim 1,
**characterised in that** said barrier (20) comprises a support (30) carrying said cylinder (50), said cylinder (50) being rotatably moveable with respect to the support (30) along the longitudinal axis (AXL) and the transverse axis (AXT), the head (70) being rotatably moveable with respect to the housing (51) along the elevated axis (AXALT).

3. Assembly according to any one of claims 1 to 2,
**characterised in that** said two abutments (75, 76) each comprise an end section (77, 78) tapered by moving away from said housing (51).

4. Assembly according to claim 3,
**characterised in that** at least one tapered end section (77, 78) is rounded.

5. Assembly according to any one of claims 1 to 4,
**characterised in that** the two abutments (75, 76) are different.

6. Assembly according to claim 5,
**characterised in that** an abutment (75) of said two abutments (75, 76) extends parallel to the elevated axis over a first length (L1) and the other abutment (76) extends parallel to the elevated axis over a second length (L2) greater than the first length (L1).

7. Assembly according to any one of claims 1 to 6,
**characterised in that** said two abutments (75, 76) each comprise a concave, rounded external face (81, 82) facing the elevated axis (AXALT).

8. Assembly according to any one of claims 1 to 7,
**characterised in that** said two abutments (75, 76) each comprise a convex, rounded internal face (83, 84) facing the elevated axis (AXALT).

9. Assembly according to any one of claims 1 to 8,
**characterised in that** an abutment (76) of said two abutments (75, 76) comprises a oval shape in a plane (99) orthogonal to the elevated axis (AXALT) and the other abutment (75) has a truncated oval shape in said plane (99).

10. Assembly according to any one of claims 1 to 9,
**characterised in that** said force-absorbing member (40) comprises a retaining ring (41) surrounding a volume passed through by said housing (51), said housing (51) being moveable in said volume.

11. Assembly according to any one of claims 1 to 10,
**characterised in that** said assembly comprises an aircraft (1) provided with said barrier (20).

12. Assembly according to claim 11,
**characterised in that** said aircraft (1) comprises a landing gear (6), said fixing (42) of said force-absorbing member (40) being secured to the landing gear (6) or to a perch (15) secured to a cell (2) of the aircraft (1).

13. Assembly according to any one of claims 11 to 12,
**characterised in that**, said barrier (20) comprising a support (30) carrying the cylinder (50) and said aircraft (1) comprising a landing gear (6), said support (30) is fixed to the landing gear (6) or to a perch (15) secured to a cell (2) of the aircraft (1).

14. Assembly according to claims 12 and 13,
**characterised in that** said landing gear (6) is a skid landing gear (8), said fixing (42) and the support (30) being fixed to a skid (8) of the landing gear (6), said support (30) having an articulation (32) carrying the cylinder (50), the articulation (32) being located above said force-absorbing member (40) when the aircraft (1) is placed.
